# EUROPEAN PATENT APPLICATION

(11) **EP 4 807 528 A1**
(43) Date of publication of application: **16.09.2026**
(21) Application number: 24899515.1
(22) Date of filing: 28.10.2024
(51) Int. Cl.: G06F 8/30

(54) **CLOUD RESOURCE ORCHESTRATION METHOD, CLOUD RESOURCE ORCHESTRATION APPARATUS, AND COMPUTING DEVICE CLUSTER**

(30) Priority: 05.12.2023 CN 202311676993; 29.04.2024 CN 202410547654
(71) Applicant: Huawei Cloud Computing Technologies Co., Ltd., Gui'an New District, Guizhou 550025 (CN)
(72) Inventor: ZHANG, Lin, Guiyang, Guizhou 550025 (CN); FENG, Cuiqin, Guiyang, Guizhou 550025 (CN); WANG, Maowei, Guiyang, Guizhou 550025 (CN)
(74) Representative: Huawei European IPR
(86) International application number: PCT/CN2024/127684
(87) International publication number: WO 2025/118872

(57) **Abstract**

This application provides a cloud resource orchestration method, a cloud resource orchestration apparatus, and a compute device cluster. The method may include: providing, to a user, first code generated based on a plurality of pieces of second code provided by a plurality of cloud platforms, where each piece of second code is used to generate an orchestration model for orchestrating a cloud resource; receiving a first orchestration model generated by the user based on the first code, where the first orchestration model includes one or more cloud platform identifiers, the one or more cloud platform identifiers indicate one or more first cloud platforms among the plurality of cloud platforms, and second code of the first cloud platform complies with a first code rule; and converting, based on the first code rule corresponding to the one or more first cloud platforms, the first orchestration model into a second orchestration model corresponding to the one or more first cloud platforms, where the second orchestration model corresponding to each first cloud platform is used to orchestrate a cloud resource of each first cloud platform.

## Description

This application claims priority to Chinese Patent Application No. 202311676993.X, filed with the China National Intellectual Property Administration on December 5, 2023 and entitled "CLOUD RESOURCE ORCHESTRATION METHOD AND APPARATUS", which is incorporated herein by reference in its entirety. This application further claims priority to Chinese Patent Application No. 202410547654.X, filed with the China National Intellectual Property Administration on April 29, 2024 and entitled "CLOUD RESOURCE ORCHESTRATION METHOD, CLOUD RESOURCE ORCHESTRATION APPARATUS, AND COMPUTE DEVICE CLUSTER", which is incorporated herein by reference in its entirety.

### TECHNICAL FIELD

This application relates to the field of computer technologies, and in particular, to a cloud resource orchestration method, a cloud resource orchestration apparatus, and a compute device cluster.

### BACKGROUND

In cloud scenarios, a user's service may require support from cloud resources across a plurality of cloud platforms. Therefore, the user needs to perform resource orchestration on the cloud resources across the plurality of cloud platforms. However, during cloud resource orchestration, the cloud platforms provide underlying code, the user writes platform-specific resource orchestration models based on the provided code, and then the cloud platforms perform orchestration based on the resource orchestration models. Due to code differences between different cloud platforms, the user needs to write a plurality of resource orchestration models, resulting in redundant tasks and low resource orchestration efficiency.

### SUMMARY

This application provides a cloud resource orchestration method, a cloud resource orchestration apparatus, and a compute device cluster. By unifying code used by different cloud platforms to generate orchestration models, that the efficiency of cloud resource orchestration can be improved.

According to a first aspect, this application provides a cloud resource orchestration method. The method includes: providing first code to a user, where the first code is generated based on a plurality of pieces of second code, the plurality of pieces of second code are provided by a plurality of cloud platforms, and each piece of second code is used to generate an orchestration model for orchestrating a cloud resource; receiving a first orchestration model generated by the user based on the first code, where the first orchestration model includes one or more cloud platform identifiers, the one or more cloud platform identifiers indicate one or more first cloud platforms among the plurality of cloud platforms, and second code of the one or more first cloud platform complies with a first code rule; and converting, based on the first code rule corresponding to the one or more first cloud platforms, the first orchestration model into a second orchestration model corresponding to the one or more first cloud platforms, where the second orchestration model corresponding to each first cloud platform is used to orchestrate a cloud resource of each first cloud platform.

In the foregoing solution, the second code of each cloud platform is unified as the first code. When writing the orchestration model, the user may implement cloud resource orchestration for different cloud platforms by using the first code, without needing to pay attention to differences between code of the different cloud platforms. This can reduce the workload of the user and improve resource orchestration efficiency.

With reference to the first aspect, in a possible implementation, before providing the first code to the user, the method further includes: parsing the second code of each cloud platform based on the first code rule with which the second code of each cloud platform complies, to obtain a plurality of pieces of first struct data; aggregating the plurality of pieces of first struct data to obtain second struct data; and generating the first code based on the second struct data.

With reference to the first aspect, in a possible implementation, the first struct data includes a first cloud resource identifier and data information corresponding to the first cloud resource identifier. Aggregating the plurality of pieces of first struct data to obtain the second struct data includes aggregating, based on a similarity among first cloud resource identifiers in the plurality of pieces of first struct data, the first cloud resource identifiers and data information corresponding to the first cloud resource identifiers in the plurality of pieces of first struct data, to obtain one or more second cloud resource identifiers and data information corresponding to the one or more second cloud resource identifiers. The second struct data includes the one or more second cloud resource identifiers and the data information corresponding to the one or more second cloud resource identifiers.

With reference to the first aspect, in a possible implementation, the data information corresponding to the second cloud resource identifier includes a parameter and a variable that correspond to the second cloud resource identifier. The method further includes aggregating, based on an association relationship between the parameter and the variable that correspond to the second cloud resource identifier, the parameter and the variable that correspond to the second cloud resource identifier.

With reference to the first aspect, in a possible implementation, converting the first orchestration model into the second orchestration model based on the first code rule corresponding to the first cloud platform includes converting, by using a transformation algorithm, the first orchestration model into the second orchestration model that complies with the first code rule corresponding to the one or more first cloud platforms.

With reference to the first aspect, in a possible implementation, the first cloud platform provides a plurality of pieces of second code, the plurality of pieces of second code of the first cloud platform respectively comply with second code rules of different resource orchestration platforms, and the second code rules of the different resource orchestration platforms include the first code rule. The first orchestration model further includes a resource orchestration platform identifier corresponding to the one or more cloud platform identifiers. The method further includes determining, from the second code rules of the plurality of resource orchestration platforms based on the resource orchestration platform identifier corresponding to the one or more first cloud platforms, the first code rule corresponding to the one or more first cloud platforms.

With reference to the first aspect, in a possible implementation, before providing the first code to the user, the method further includes: determining a rule description text of each resource orchestration platform, and processing the rule description text of each resource orchestration platform by using a language model, to obtain the second code rule of each resource orchestration platform.

With reference to the first aspect, in a possible implementation, before providing the first code to the user, the method further includes: determining a rule description text of each cloud platform, and processing the rule description text of each cloud platform by using a language model, to obtain the third code rule of each cloud platform.

With reference to the first aspect, in a possible implementation, the first cloud platform provides one piece of second code, and the method further includes determining, from third code rules of the plurality of cloud platforms based on the one or more cloud platform identifiers, the first code rule corresponding to the one or more first cloud platforms.

According to a second aspect, this application provides a cloud resource orchestration apparatus. The apparatus includes a processing module, an interaction module, and a conversion module.

The processing module is configured to generate first code based on a plurality of pieces of second code. The plurality of pieces of second code are provided by a plurality of cloud platforms. Each piece of second code is used to generate an orchestration model for cloud resource orchestration.

The interaction module is configured to: provide the first code to a user, and receive a first orchestration model generated by the user based on the first code. The first orchestration model includes one or more cloud platform identifiers. The cloud platform identifier indicates one or more first cloud platforms among the plurality of cloud platforms. Second code of the one or more first cloud platforms complies with a first code rule.

The conversion module is configured to convert, based on the first code rule corresponding to the one or more first cloud platforms, the first orchestration model into a second orchestration model corresponding to the one or more first cloud platforms. The second orchestration model corresponding to each first cloud platform is used to orchestrate a cloud resource of each first cloud platform.

With reference to the second aspect, in a possible implementation, the processing module is specifically configured to: parse the second code of each cloud platform based on the first code rule with which the second code of each cloud platform complies, to obtain a plurality of pieces of first struct data; aggregate the plurality of pieces of first struct data to obtain second struct data; and generate the first code based on the second struct data.

With reference to the second aspect, in a possible implementation, the first struct data includes a first cloud resource identifier and data information corresponding to the first cloud resource identifier. The processing module is specifically configured to aggregate, based on a similarity among first cloud resource identifiers in the plurality of pieces of first struct data, the first cloud resource identifiers and data information corresponding to the first cloud resource identifiers in the plurality of pieces of first struct data, to obtain one or more second cloud resource identifiers and data information corresponding to the one or more second cloud resource identifiers. The second struct data includes the one or more second cloud resource identifiers and the data information corresponding to the one or more second cloud resource identifiers.

With reference to the second aspect, in a possible implementation, the data information corresponding to the second cloud resource identifier includes a parameter and a variable that correspond to the second cloud resource identifier. The processing module is further configured to aggregate, based on an association relationship between the parameter and the variable that correspond to the second cloud resource identifier, the parameter and the variable that correspond to the second cloud resource identifier.

With reference to the second aspect, in a possible implementation, the conversion module is specifically configured to convert, by using a transformation algorithm, the first orchestration model into the second orchestration model that complies with the first code rule corresponding to the one or more first cloud platforms.

With reference to the second aspect, in a possible implementation, the plurality of pieces of second code of the first cloud platform respectively comply with second code rules of different resource orchestration platforms, and the second code rules of the different resource orchestration platforms include the first code rule. The first orchestration model further includes a resource orchestration platform identifier. The conversion module is further configured to determine the first code rule from the second code rules of the plurality of resource orchestration platforms based on the resource orchestration platform identifier.

With reference to the second aspect, in a possible implementation, before providing the first code to the user, the processing module is further configured to: determine a rule description text of each resource orchestration platform, and process the rule description text of each resource orchestration platform by using a language model, to obtain the second code rule of each resource orchestration platform.

With reference to the second aspect, in a possible implementation, the first cloud platform provides one piece of second code, and the conversion module is further configured to determine the first code rule from third code rules of the plurality of cloud platforms based on the cloud platform identifier.

With reference to the second aspect, in a possible implementation, before providing the first code to the user, the processing module is further configured to: determine a rule description text of each cloud platform, and process the rule description text of each cloud platform by using a language model, to obtain the third code rule of each cloud platform.

According to a third aspect, this application further provides a compute device cluster. The compute device cluster includes at least one compute device. Each compute device includes a processor and a memory. The processor of the at least one compute device is configured to execute instructions stored in the memory of the at least one compute device, to enable the compute device cluster to perform the method according to the first aspect and any one of the possible implementations of the first aspect.

According to a fourth aspect, this application further provides a computer-readable storage medium. The computer-readable storage medium includes instructions. When the instructions are run on a computer, the computer is enabled to implement the method according to the first aspect and any one of the possible implementations of the first aspect.

According to a fifth aspect, this application further provides a computer program product. The computer program product includes instructions. When the instructions are run on a computer, the computer is enabled to implement the method according to the first aspect and any one of the possible implementations of the first aspect.

Any one of the foregoing apparatus, compute device cluster, computer-readable storage medium, or computer program product is configured to perform the method provided above. Therefore, for beneficial effects that can be achieved by the apparatus, the compute device cluster, the computer-readable storage medium, or the computer program product, refer to beneficial effects of a corresponding solution in the corresponding method provided above. Details are not described herein again.

### BRIEF DESCRIPTION OF DRAWINGS

FIG. 1 is a diagram of a cloud resource orchestration scenario according to an embodiment of this application;
FIG. 2 is a diagram of another cloud resource orchestration scenario according to an embodiment of this application;
FIG. 3 is a flowchart of a cloud resource orchestration method based on the scenarios shown in FIG. 1 and FIG. 2 according to an embodiment of this application;
FIG. 4 is a diagram of obtaining a code rule in the method shown in FIG. 3 according to an embodiment of this application;
FIG. 5a to FIG. 5c are diagrams of aggregating struct data of a plurality of pieces of second code according to an embodiment of this application;
FIG. 6 is a flowchart of another cloud resource orchestration method according to an embodiment of this application;
FIG. 7 and FIG. 8 are diagrams of cloud resource orchestration scenarios to which the method shown in FIG. 6 is applied according to an embodiment of this application;
FIG. 9 is a diagram of a structure of a cloud resource orchestration apparatus based on the methods shown in FIG. 3 and FIG. 6 according to an embodiment of this application;
FIG. 10 is a diagram of a structure of a compute device according to an embodiment of this application;
FIG. 11 is a diagram of a structure of a compute device cluster according to an embodiment of this application; and
FIG. 12 is a diagram of a connection manner between compute devices in the compute device cluster shown in FIG. 11 according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In the description of embodiments of this application, the word such as "example", "for example", or "in an example" is used to represent an example, an illustration, or a description. Any embodiment or design solution described as "example", "for example", or "in an example" in embodiments of this application should not be interpreted as being more preferred or advantageous than another embodiment or design solution. Specifically, the use of the word such as "example", "for example", or "in an example" is intended to present related concepts in a specific manner.

In the descriptions of embodiments of this application, the term "and/or" describes only an association relationship between associated objects, and indicates that three relationships may exist. For example, A and/or B may indicate the following three cases: Only A exists, only B exists, and both A and B exist. In addition, unless otherwise specified, the term "a plurality of" means two or more. For example, a plurality of systems refer to two or more systems, and a plurality of screen terminals refers to two or more screen terminals.

In addition, the terms "first" and "second" mentioned below are merely intended for a purpose of description, and shall not be understood as an indication or implication of relative importance or implicit indication of indicated technical features. Therefore, a feature limited by "first" or "second" may explicitly or implicitly include one or more features. The terms "include", "have", and their variants all mean "include but are not limited to", unless otherwise specifically emphasized in another manner.

Infrastructure as code (infrastructure as code, IaC) is a method for automating a configuration and management process of infrastructure.

Cloud resource orchestration is automatic creation, configuration, deployment, and management of a cloud resource of a cloud platform through IaC.

An orchestration framework is a tool provided by the cloud platform for writing a resource orchestration model (or referred to as a resource orchestration template). The orchestration framework may include a defined code component, program interface, protocol, and/or the like. Different orchestration frameworks comply with different code rules.

Second code is a resource code module provided by the cloud platform for a user. The resource code module may include a template, an application programming interface, and/or the like for implementing cloud resource orchestration. The user may write a resource orchestration model of the cloud platform based on the second code of the cloud platform. The user writes the resource orchestration model by using the second code of the cloud platform. This can improve cloud resource orchestration efficiency and reduce operation and maintenance costs. The second code may be generated based on the orchestration framework of the cloud platform, or may be generated based on a unified orchestration framework.

A resource orchestration platform is used to provide a cloud resource orchestration service for a user in a multi-cloud scenario. Specifically, the resource orchestration platform may provide the unified orchestration framework for a plurality of cloud platforms, and the plurality of cloud platforms provide respective second code based on the unified orchestration framework. The user obtains the second code of each cloud platform through the resource orchestration platform, and then generates a resource orchestration model of each cloud platform based on the second code of each cloud platform. The resource orchestration platform interacts with the cloud platform based on the resource orchestration model of the cloud platform written by the user, to complete cloud resource orchestration for the cloud platform.

First code is a resource code module generated by the resource orchestration platform by unifying second code of a plurality of cloud platforms. In the multi-cloud scenario, the user may generate a first resource orchestration model based on the first code. The resource orchestration platform may convert the first resource orchestration model into a second resource orchestration model of one or more cloud platforms, and perform cloud resource orchestration for each cloud platform based on the second resource orchestration model of each cloud platform.

In some complex cloud scenarios, a user may need to rely on cloud resources of a plurality of cloud platforms to jointly support stable service running. To achieve this goal, the user needs to orchestrate the cloud resources of different cloud platforms.

In a related technology 1, the user writes a resource orchestration model of each cloud platform based on an orchestration framework provided by each cloud platform, and each cloud platform performs cloud resource orchestration based on the resource orchestration model written by the user.

In the foregoing solution, in a multi-cloud scenario, orchestration frameworks of different cloud platforms may be different. To be specific, the orchestration frameworks of the different cloud platforms may include different code components, different program interfaces, and/or the like. In this case, the user needs to write resource orchestration models for the different cloud platforms based on the orchestration frameworks of the different cloud platforms. This increases burdens on the user in writing.

In a related technology 2, different cloud platforms each provide a resource code module for the user based on a unified orchestration framework defined by a resource orchestration platform. The user may write a resource orchestration model of each cloud platform based on the resource code module of each cloud platform, and then execute the resource orchestration model of each cloud platform by using the resource orchestration platform. In this way, the resource orchestration platform interacts with each cloud platform to automatically orchestrate a cloud resource of each cloud platform.

In the foregoing solution, orchestration frameworks of the cloud platforms are unified by using the resource orchestration platform. In this way, the user does not need to deeply understand the orchestration framework of each cloud platform, thereby reducing complexity of orchestration work of the user. However, there is still a difference between the resource code modules of the different cloud platforms (for example, cloud resources in the resource code modules of the different cloud platforms may be different, and/or parameters, variables, and/or data of a same cloud resource in the resource code modules of the different cloud platforms may be different). In multi-cloud scenarios, the user needs to consider the difference between the resource code modules of the different cloud platforms to write the resource orchestration models for the different cloud platforms, resulting in redundant tasks and low resource orchestration efficiency.

Therefore, an embodiment of this application provides a cloud resource orchestration method, to resolve the foregoing problem.

In the cloud resource orchestration method according to this embodiment of this application, first code is generated by aggregating second code of different cloud platforms, and after a user generates a first orchestration model based on the first code, the first orchestration model is converted, based on a cloud platform identifier in the first orchestration model, into a second orchestration model that complies with a first code rule corresponding to a first cloud platform indicated by the cloud platform identifier. According to the method, resource code of different cloud platforms is unified, so that the user does not need to consider a difference between the resource code of the different cloud platforms when writing a resource code model. This improves writing efficiency of the user and enhances user experience.

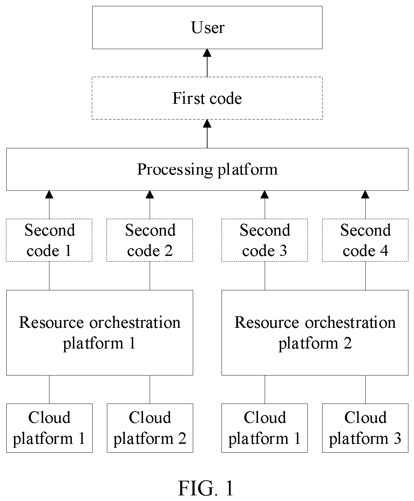

FIG. 1 is a diagram of a cloud resource orchestration scenario according to an embodiment of this application. As shown in FIG. 1, the scenario includes a processing platform 1, at least one resource orchestration platform (for example, a resource orchestration platform 1 and a resource orchestration platform 2 in FIG. 1), and a plurality of cloud platforms (for example, cloud platforms 1 to 3 in FIG. 1). Each resource orchestration platform interacts with at least one cloud platform. The cloud platforms with which each resource orchestration platform interacts may include a same cloud platform and/or different cloud platforms. For example, as shown in FIG. 1, the resource orchestration platform 1 interacts with the cloud platform 1 and the cloud platform 2, and the resource orchestration platform 2 interacts with the cloud platform 1 and the cloud platform 3.

The cloud platform releases a resource code module (namely, second code) based on a unified orchestration framework defined by the resource orchestration platform with which the cloud platform interacts. Because orchestration frameworks defined by different resource orchestration platforms are different, second code released by different cloud platforms and/or a same cloud platform based on the different orchestration frameworks is also different. For example, as shown in FIG. 1, the cloud platform 1 and the cloud platform 2 respectively release second code 1 and second code 2 based on an orchestration framework 1 defined by the resource orchestration platform 1, and the cloud platform 1 and the cloud platform 3 respectively release second code 3 and second code 4 based on an orchestration framework 2 defined by the resource orchestration platform 2. Any two of the second code 1, the second code 2, the second code 3, and the second code 4 are different. In the foregoing related technology, the user may use the second code of the cloud platform to write a resource orchestration model of the cloud platform, to orchestrate a cloud resource of the cloud platform based on the resource orchestration model of the cloud platform.

The processing platform 1 abstracts and aggregates the second code released on each resource orchestration platform to generate unified first code and provide the unified first code to the user. For example, as shown in FIG. 1, the processing platform 1 abstracts and aggregates the second code 1, the second code 2, the second code 3, and the second code 4, to generate the first code.

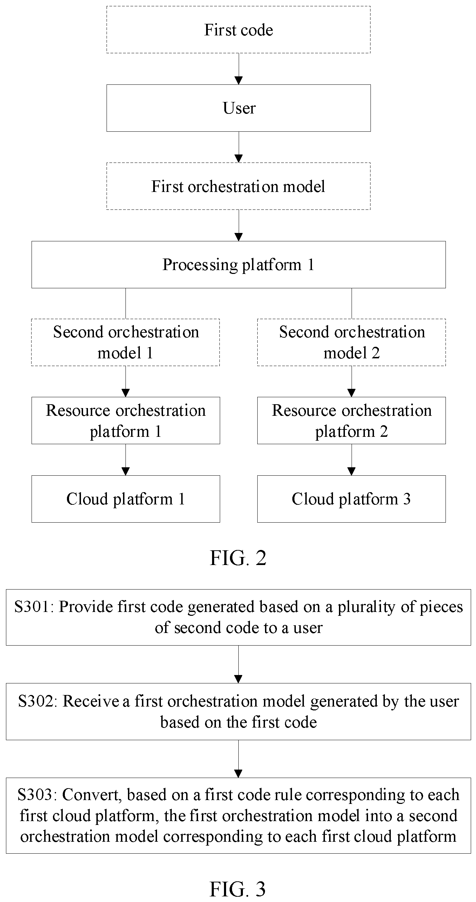

The user may obtain the unified first code by using the processing platform 1, and may write one or more first orchestration models based on a cloud resource orchestration requirement in a multi-cloud scenario. Each orchestration model is used to perform cloud resource orchestration for one cloud platform. After the user writes and generates the first orchestration model, the processing platform 1 performs conversion processing on the first orchestration model. The following provides descriptions with reference to FIG. 2.

FIG. 2 is a diagram of another cloud resource orchestration scenario according to an embodiment of this application. As shown in FIG. 2, the user writes and generates the first orchestration model by using the first code. The first orchestration model includes a cloud platform identifier 1, a cloud platform identifier 3, a resource orchestration platform identifier 1 corresponding to the cloud platform identifier 1, and a resource orchestration platform identifier 2 corresponding to the cloud platform identifier 3. The cloud platform identifier 1 indicates the cloud platform 1, and the cloud platform identifier 3 indicates the cloud platform 3. The resource orchestration platform identifier 1 indicates the resource orchestration platform 1, and the resource orchestration platform identifier 2 indicates the resource orchestration platform 2.

The processing platform 1 may convert the first orchestration model into a second orchestration model 1 based on a first code rule corresponding to the cloud platform 1, and convert the first orchestration model into a second orchestration model 2 based on a first code rule corresponding to the cloud platform 3. Then, the resource orchestration platform 1 orchestrates a cloud resource of the cloud platform 1 based on the second orchestration model 1, and the resource orchestration platform 2 orchestrates a cloud resource of the cloud platform 3 based on the second orchestration model 2.

The following describes in detail the cloud resource orchestration method according to this embodiment of this application with reference to FIG. 3.

FIG. 3 is a flowchart of the cloud resource orchestration method according to an embodiment of this application. The method may be applied to the processing platform 1 shown in FIG. 1 and FIG. 2. The processing platform 1 may include a server in a cloud service system, and may further include a terminal device of the user.

As shown in FIG. 3, the method may include the following steps S301 to S303.

S301: The processing platform 1 generates the first code based on the second code of the plurality of cloud platforms, and provides the first code to the user.

The second code of the plurality of cloud platforms is different. However, the second code of the plurality of cloud platforms is generated based on the orchestration framework of the resource orchestration platform, and the orchestration framework of the resource orchestration platform complies with a second code rule of the resource orchestration platform. Therefore, the second code of each cloud platform is generated based on the second code rule of the resource orchestration platform with which the cloud platform interacts. In this way, the processing platform 1 may parse and aggregate, based on the second code rule of each resource orchestration platform, the second code of the cloud platform with which the processing platform 1 interacts, to generate the first code.

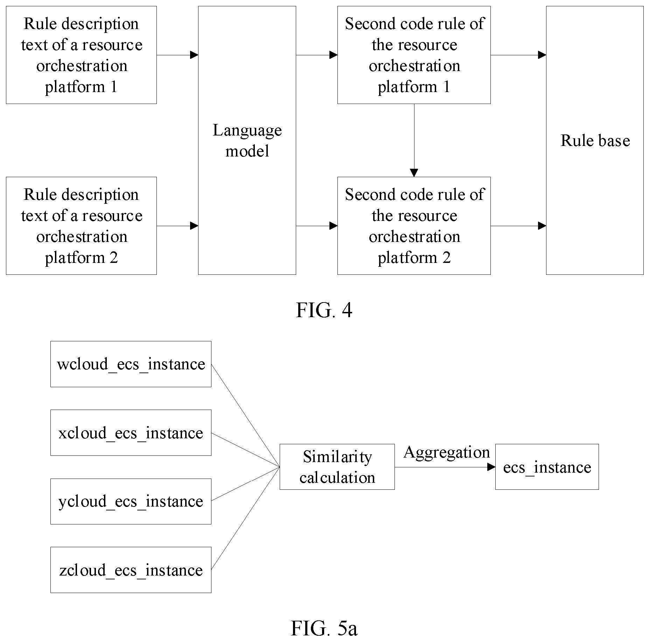

The processing platform 1 may process a rule description text of each resource orchestration platform by using a language model, to obtain the second code rule of each resource orchestration platform, and then convert the second code rule of each resource orchestration platform into a code language and store a converted second rule into a rule base. The second code rule of the resource orchestration platform may include IaC rules such as a resource (Resource) rule, a data source (data source) rule, a schema (schema) definition rule, a parameter declaration rule, an operation (for example, plan/apply/schedule/main/outputs) rule, a resource release rule, and a check rule. A schema is used to describe information such as a structure, an attribute, a type, a range, and a default value of data, to ensure data consistency and validity. For example, as shown in FIG. 4, the processing platform 1 may input a rule description text of the resource orchestration platform 1 and a rule description text of the resource orchestration platform 2 into a pre-trained language model, and then code rules of the resource orchestration platform 1 and the resource orchestration platform 2 may be obtained through processing by the language model. The processing platform may summarize and generalize the code rules from the rule description texts by using the language model, and therefore may parse the second code based on the code rules.

The language model may be obtained through training by using a pre-obtained training sample set. The training sample set includes a plurality of rule description samples and corresponding code rule samples. In a training process, the rule description samples may be input into the language model, a loss value is calculated based on an output of the language model and the code rule samples corresponding to the rule description samples, and then a parameter of the language model is updated based on the loss value until the loss value meets a preset threshold. It should be noted that a structure and a training method of the language model are not specifically limited in embodiments of this application.

When the processing platform 1 is a server, the user may send the rule description text of each resource orchestration platform to the server by using the terminal device, or the server may obtain the rule description text of each resource orchestration platform from each resource orchestration platform. When the processing platform 1 is a terminal device, the user may obtain the rule description text of each resource orchestration platform from each resource orchestration platform by using the terminal device.

After obtaining the second code rule of each resource orchestration platform, the processing platform 1 may parse, based on the second code rule of each resource orchestration platform, the second code of the cloud platform with which each resource orchestration platform interacts, to obtain a plurality of pieces of abstract first struct data. One piece of second code corresponds to one piece of first struct data. FIG. 2 is used as an example. The processing platform 1 parses the second code 1 of the cloud platform 1 and the second code 2 of the cloud platform 2 based on a second code rule of the resource orchestration platform 1, and parses the second code 3 of the cloud platform 1 and the second code 4 of the cloud platform 3 based on a second code rule of the resource orchestration platform 2, so that four pieces of first struct data may be obtained. When the processing platform 1 is a server, the user may send the second code of each cloud platform to the server by using the terminal device, or the server may obtain the second code of each cloud platform from each resource orchestration platform. When the processing platform 1 is a terminal device, the user may obtain the second code of each cloud platform from each resource orchestration platform by using the terminal device.

The processing platform 1 may aggregate the plurality of pieces of first struct data to obtain second struct data. The processing platform 1 may generate the first code based on the second struct data based on a fourth code rule. Each piece of first struct data may include at least one first cloud resource identifier and data information corresponding to the at least one first cloud resource identifier, and the second struct data includes one or more second cloud resource identifiers and data information corresponding to the one or more second cloud resource identifiers.

Specifically, the processing platform 1 may aggregate, based on a similarity among first cloud resource identifiers in the plurality of pieces of first struct data and a similarity threshold, the first cloud resource identifiers and data information corresponding to the first cloud resource identifiers in the plurality of pieces of first struct data, to obtain the one or more second cloud resource identifiers and the data information corresponding to the one or more second cloud resource identifiers.

For example, the first cloud resource identifier indicates an elastic compute service (elastic compute service, ECS) instance (instance). FIG. 5a shows four elastic compute service instance identifiers in the first struct data: wcloud_ecs_instance, xcloud_ecs_instance, ycloud_ecs_instance, and zcloud_ecs_instance. When a similarity among the four elastic compute service instance identifiers is greater than the similarity threshold, the processing platform 1 may aggregate the four elastic compute service instance identifiers to obtain the second cloud resource identifier, for example, ecs_instance. Data information corresponding to similar cloud resource identifiers in struct data may be aggregated through similarity calculation of the cloud resource identifiers. This helps the user use the data information corresponding to the cloud resource identifiers and improve efficiency in model writing. During similarity calculation, a method that helps quantify a text similarity may be used, for example, including but not limited to statistical distance measurement, cosine similarity measurement, or Jaccard similarity measurement.

The data information may include a module identifier, a schema identifier, a function identifier, and the like. A module, a mode, and a function indicated by the module identifier, the schema identifier, and the function identifier include data elements such as a parameter, a variable, and a configuration value.

The data information corresponding to the second cloud resource identifier includes the data information corresponding to the first cloud resource identifier before aggregation. For example, the second cloud resource identifier is ecs_instance, and the data information corresponding to the second cloud resource identifier includes data information corresponding to wcloud_ecs_instance, xcloud_ecs_instance, ycloud_ecs_instance, and zcloud_ecs_instance. The processing platform 1 may further aggregate, based on an association relationship between the data elements corresponding to the second cloud resource identifier, data elements corresponding to the second cloud resource identifier.

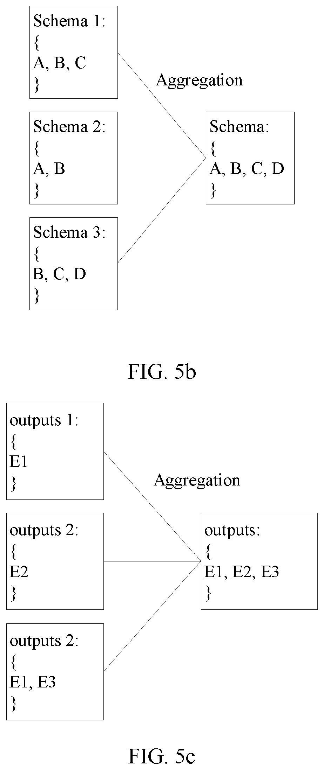

The schema (schema) is used as an example. FIG. 5b shows three schemas, including a schema 1, a schema 2, and a schema 3. The schema 1 includes parameters A, B, and C, the schema 2 includes parameters A and B, and the schema 3 includes parameters B, C, and D. The schema 1 and the schema 2 both include A and B, the schema 2 and the schema 3 both include B, and the schema 2 and the schema 3 both include B. In this case, the processing platform 1 may aggregate parameters of the schema 1, the schema 2, and the schema 3 into parameters {A, B, C, D}.

An output function outputs is used as an example. FIG. 5c shows three outputs, including outputs 1, outputs 2, and outputs 2. The two outputs 2 are from different pieces of second code. The outputs 1 includes a parameter E1, and the two outputs 2 respectively include parameter E2 and parameters E1 and E3. The two outputs 2 may be aggregated into one outputs 2, and the outputs 1 and the outputs 2 both include E1. In this case, the processing platform 1 may aggregate the parameters in the outputs 1, the outputs 2, and the outputs 2 into {E1, E2, E3}.

S302: The processing platform 1 receives the first orchestration model written by the user based on the first code. The first orchestration model includes one or more cloud platform identifiers and resource orchestration platform identifiers corresponding to the one or more cloud platform identifiers. The cloud platform identifier indicates a first cloud platform in the plurality of cloud platforms, the resource orchestration platform identifier indicates a first resource orchestration platform in a plurality of resource orchestration platforms, and the first resource orchestration platform interconnects with the first cloud platform.

The user may write the first orchestration model based on the first code provided by the processing platform 1 and an actual cloud resource orchestration requirement in the multi-cloud scenario. For example, when the user needs to orchestrate the cloud resource of the cloud platform 1 by using the resource orchestration platform 1, and orchestrate the cloud resource of the cloud platform 3 by using the resource orchestration platform 2, as shown in FIG. 2, the first orchestration model may be written and generated based on the first code. The first orchestration model includes the cloud platform identifier 1, the cloud platform identifier 3, the resource orchestration platform identifier 1 corresponding to the cloud platform identifier 1, and the resource orchestration platform identifier 2 corresponding to the cloud platform identifier 3. The resource orchestration platform identifier 1 indicates the resource orchestration platform 1, and the resource orchestration platform identifier 2 indicates the resource orchestration platform 2.

S303: The processing platform 1 converts, based on a first code rule corresponding to the one or more first cloud platforms, the first orchestration model into a second orchestration model corresponding to the one or more first cloud platforms.

The processing platform 1 determines, based on the resource orchestration platform identifier corresponding to the cloud platform identifier in the first orchestration model, the first code rule corresponding to each first cloud platform from the second code rules of the resource orchestration platforms recorded in the rule base. Second code provided by the first cloud platform complies with the first code rule, and the second code rules of the plurality of resource orchestration platforms include the first code rule.

Specifically, the first orchestration model shown in FIG. 2 is used as an example. The first orchestration model includes the cloud platform identifier 1, the cloud platform identifier 3, the resource orchestration platform identifier 1 corresponding to the cloud platform identifier 1, and the resource orchestration platform identifier 2 corresponding to the cloud platform identifier 3. The processing platform 1 may determine, based on the resource orchestration platform identifier 1 corresponding to the cloud platform identifier 1, that the first code rule that corresponds to the cloud platform 1 indicated by the cloud platform identifier 1 is the second code rule of the resource orchestration platform 1. In addition, the processing platform 1 may determine, based on the resource orchestration platform identifier 2 corresponding to the cloud platform identifier 3, that the first code rule corresponding to the cloud platform 3 is the second code rule of the resource orchestration platform 2.

After determining the first code rule, the processing platform 1 converts the first orchestration model into the second orchestration model corresponding to each first cloud platform by using a transformation algorithm. The second orchestration model complies with the first code rule corresponding to each first cloud platform. The second orchestration model 1 and the second orchestration model 2 shown in FIG. 2 are used as an example. The second orchestration model 1 complies with the second code rule of the resource orchestration platform 1, and the cloud platform 1 may identify the second orchestration model 1. The second orchestration model 2 complies with the second code rule of the resource orchestration platform 2, and the cloud platform 3 may identify the second orchestration model 2.

Based on the embodiment shown in FIG. 1, FIG. 2, and FIG. 5, an embodiment of this application further provides another cloud resource orchestration method.

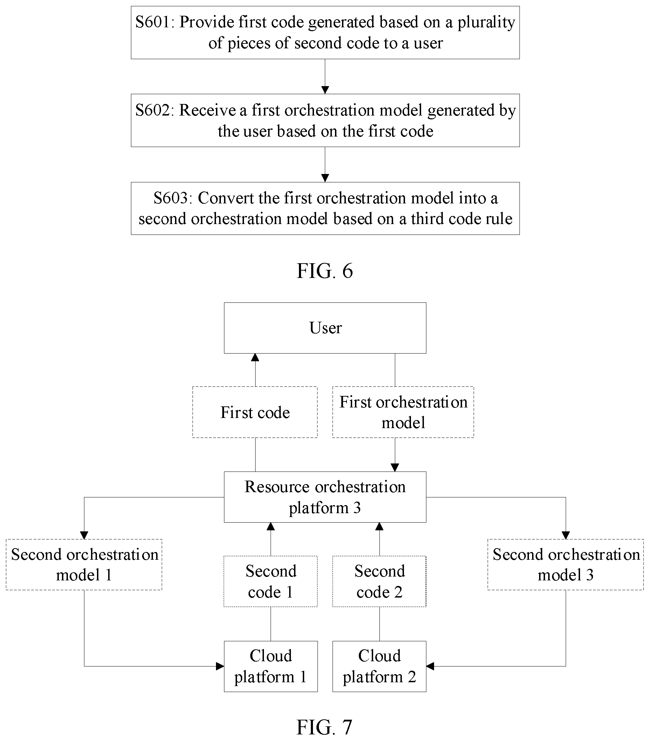

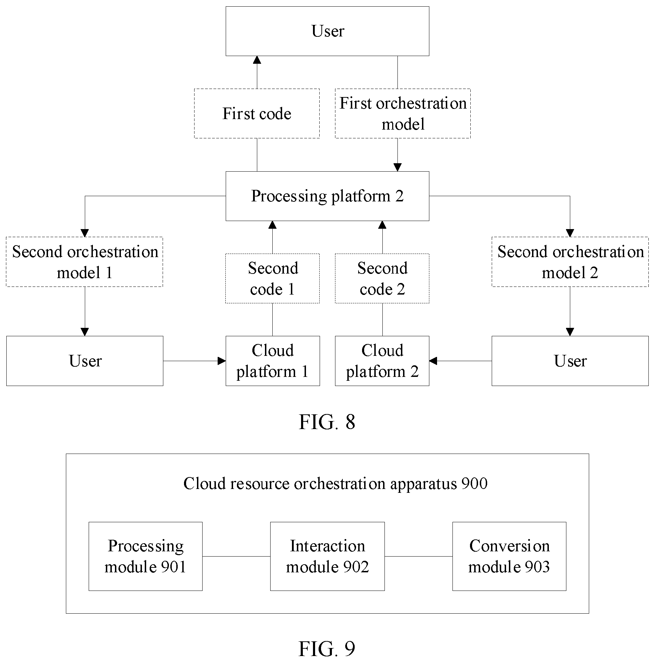

FIG. 6 is a flowchart of the cloud resource orchestration method according to an embodiment of this application. The method may be applied to a resource orchestration platform 3 shown in FIG. 7 and/or a processing platform 2 shown in FIG. 8.

In a scenario shown in FIG. 7, the cloud platform 1 and the cloud platform 2 release second code based on an orchestration framework 3 of the resource orchestration platform 3. The second code released by the cloud platform 1 and the cloud platform 2 comply with a first code rule of the resource orchestration platform 3.

In a scenario shown in FIG. 8, the cloud platform 1 and the cloud platform 2 release the second code based on respective orchestration frameworks. The second code released by the cloud platform 1 and the cloud platform 2 comply with a third code rule of the respective cloud platform. The orchestration frameworks of the cloud platform 1 and the cloud platform 2 are different, and the third code rules of the cloud platform 1 and the cloud platform 2 are different.

As shown in FIG. 6, the method may include steps S601 to S603.

S601: Generate the first code based on the second code provided by a plurality of cloud platforms, and provide the first code to a user.

S602: Receive a first orchestration model written by the user based on the first code. The first orchestration model includes one or more cloud platform identifiers.

It should be noted that, in the scenario shown in FIG. 7, the resource orchestration platform 3 parses the second code based on a third code rule of the resource orchestration platform 3, to obtain struct data. The resource orchestration platform 3 may process a rule description text of the resource orchestration platform 3 by using a language model with reference to FIG. 4, to obtain the third code rule of the resource orchestration platform 3. Different from the embodiment shown in FIG. 3, the first orchestration model in the embodiment shown in FIG. 6 does not include a resource orchestration platform identifier.

In the scenario shown in FIG. 8, the processing platform 2 parses the second code of each cloud platform based on the third code rule of each cloud platform, to obtain the struct data. The processing platform 2 may process a rule description text of each cloud platform by using the language model with reference to FIG. 4, to obtain the third code rule of each cloud platform.

S603: Convert, based on a first code rule corresponding to the one or more first cloud platforms, the first orchestration model into a second orchestration model corresponding to one or more first cloud platforms.

In the scenario shown in FIG. 7, the first code rule corresponding to the first cloud platform is the first code rule of the resource orchestration platform 3. The resource orchestration platform 3 may perform conversion directly based on the first code rule. After the conversion succeeds, the resource orchestration platform 3 may interact with the cloud platform 1 and the cloud platform 2 respectively based on the second orchestration model 1 of the cloud platform 1 and the second orchestration model 2 of the cloud platform 2, to complete resource orchestration.

In the scenario shown in FIG. 8, the first code rule corresponding to the first cloud platform is a third code rule of the first cloud platform. The processing platform 2 may determine the third code rule of the first cloud platform based on the cloud platform identifiers in the model, and then perform conversion. After the conversion succeeds, the processing platform 2 may feed back the second orchestration model 1 of the cloud platform 1 and the second orchestration model 2 of the cloud platform 2 to the user.

For a specific process of S601 to S603, refer to descriptions of S301 to S303 in FIG. 3. Details are not described herein again.

Based on the method embodiments shown in FIG. 3 and FIG. 6, an embodiment of this application further provides a cloud resource orchestration apparatus.

FIG. 9 is a diagram of a structure of a cloud resource orchestration apparatus 900 according to an embodiment of this application. As shown in FIG. 9, the cloud resource orchestration apparatus 900 includes a processing module 901, an interaction module 902, and a conversion module 903.

The processing module 901 is configured to generate first code based on a plurality of pieces of second code. The plurality of pieces of second code are provided by a plurality of cloud platforms. Each piece of second code is used to generate an orchestration model for cloud resource orchestration.

The interaction module 902 is configured to: provide the first code to a user, and receive a first orchestration model generated by the user based on the first code. The first orchestration model includes one or more cloud platform identifiers. The one or more cloud platform identifiers indicate one or more first cloud platforms among the plurality of cloud platforms. Second code of the one or more first cloud platforms complies with a first code rule.

The conversion module 903 is configured to convert, based on the first code rule corresponding to the one or more first cloud platforms, the first orchestration model into a second orchestration model corresponding to the one or more first cloud platforms. The second orchestration model corresponding to each first cloud platform is used to orchestrate a cloud resource of each first cloud platform.

All the processing module 901, the interaction module 902, and the conversion module 903 may be implemented by using software, or may be implemented by using hardware. For example, the following uses the processing module 901 as an example to describe an implementation of the processing module 901. Similarly, for implementations of the interaction module 902 and the conversion module 903, refer to the implementation of the processing module 901.

As an example of a software functional unit, the processing module 901 may include code run on a compute instance. The compute instance may include at least one of a physical host (compute device), a virtual machine, and a container. Further, there may be one or more compute instances. For example, the processing module 901 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

As an example of a hardware functional unit, the processing module 901 may include at least one compute device, for example, a server. Alternatively, a module A may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in the processing module 901 may be distributed in a same region, or may be distributed in different regions. The plurality of compute devices included in the processing module 901 may be distributed in a same AZ, or may be distributed in different AZs. Similarly, the plurality of compute devices included in the processing module 901 may be distributed in a same VPC, or may be distributed in the plurality of VPCs. The plurality of compute devices may be any combination of compute devices such as a server, an ASIC, a PLD, a CPLD, an FPGA, and GAL.

It should be noted that, when the cloud resource orchestration apparatus 900 according to the embodiment shown in FIG. 9 performs a cloud resource orchestration method, division into the foregoing functional modules is merely used as an example for description. During actual application, the foregoing functions may be allocated to different functional modules and implemented based on a requirement. In other words, a device is divided into different functional modules in terms of an inner structure of, to implement all or some of the functions described above. In addition, the cloud resource orchestration apparatus according to the foregoing embodiment and the cloud resource orchestration method embodiment shown in FIG. 3 or FIG. 6 pertain to a same concept. For a specific implementation process of the cloud resource orchestration apparatus, refer to the method embodiment. Details are not described herein again.

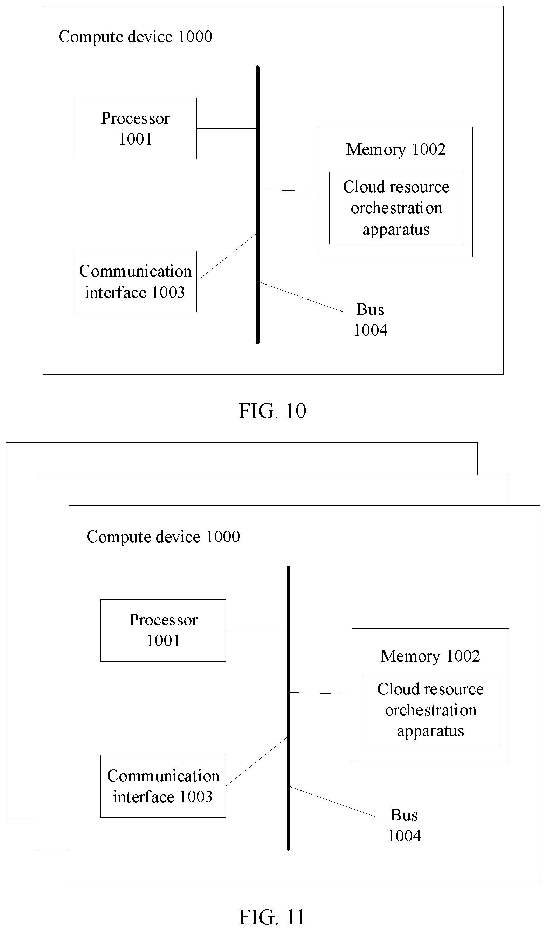

FIG. 10 is a diagram of a hardware structure of a compute device 1000 according to an embodiment of this application.

The compute device 1000 may be the foregoing server or the terminal device of the user. Refer to FIG. 10. The compute device 1000 includes a processor 1001, a memory 1002, a communication interface 1003, and a bus 1004. The processor 1001, the memory 1002, and the communication interface 1003 are connected to each other through the bus 1004. The processor 1001, the memory 1002, and the communication interface 1003 may alternatively be connected in a connection manner other than using the bus 1004.

The processor 1001 may be a general-purpose processor, and the general-purpose processor may be a processor that performs a specific step and/or operation by reading and executing content stored in a memory (for example, the memory 1002). For example, the general-purpose processor may be a central processing unit (central processing unit, CPU). The processor 1001 may include at least one circuit, to perform all or some of the steps of the cloud resource orchestration method according to the embodiment shown in FIG. 2 or FIG. 5.

The memory 1002 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a hard disk drive. The memory 1002 stores executable program code, and the processor 1001 executes the executable program code to separately implement functions of the processing module 901, the interaction module 902, and the conversion module 903, to implement the method shown in FIG. 3 or FIG. 6. In other words, the memory 1002 stores instructions for performing the method shown in FIG. 3 or FIG. 6.

The communication interface 1003 includes interfaces configured to implement interconnection of the components inside the compute device 1000, for example, an input/output (input/output, I/O) interface, a physical interface, and a logical interface, and an interface configured to implement interconnection between the compute device 1000 and another device (for example, another compute device or user equipment). The physical interface may be an Ethernet interface, an optical fiber interface, an ATM interface, or the like.

The bus 1004 may be any type of communication bus, for example, a system bus, used to implement interconnection between the processor 1001, the memory 1002, and the communication interface 1003.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Embodiments of this application impose no limitation on specific implementations of the foregoing components.

The compute device 1000 shown in FIG. 10 is merely an example. In an implementation process, the compute device 1000 may further include other components, which are not listed one by one in this specification.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 11, the compute device cluster includes at least one compute device 1000. Memories 1002 in one or more compute devices 1000 in the compute device cluster may store same instructions for performing the method shown in FIG. 3 or FIG. 6.

In some possible implementations, the memories 1002 in the one or more compute devices 1000 in the compute device cluster may alternatively separately store some instructions for performing the method shown in FIG. 3 or FIG. 6. In other words, a combination of one or more compute devices 100 may jointly store the instructions for performing the method shown in FIG. 3 or FIG. 6.

It should be noted that the memories 1002 in different compute devices 1000 in the compute device cluster may store different instructions, and different instructions are separately used to perform some functions of the apparatus shown in FIG. 9. In other words, the instructions stored in the memories 1002 in different compute devices 1000 may implement functions of one or more modules in the apparatus shown in FIG. 9.

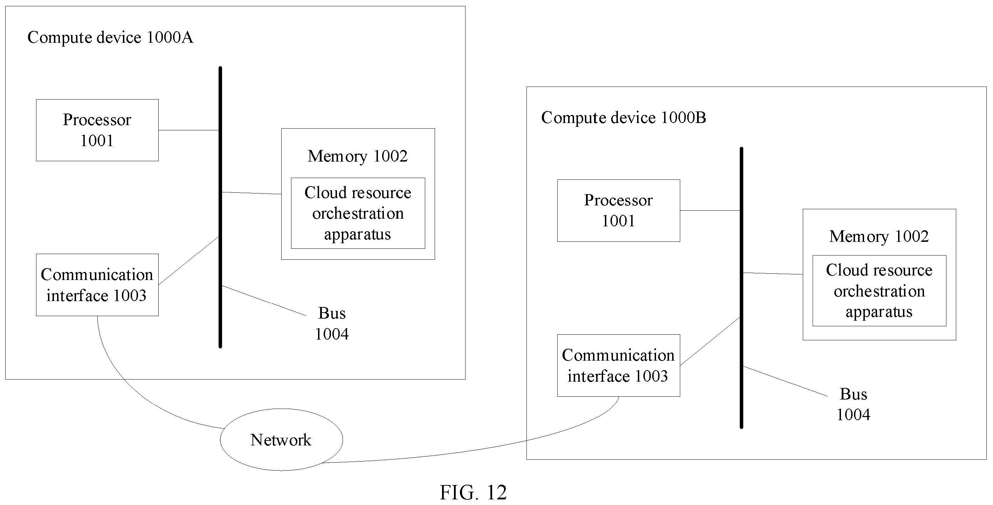

In some possible implementations, the one or more compute devices in the compute device cluster may be connected through a network. The network may be a wide area network, a local area network, or the like. FIG. 12 shows a possible implementation. As shown in FIG. 12, two compute devices 1000A and 1000B are connected via a network. Specifically, each compute device is connected to the network through a communication interface in the compute device. In this possible implementation, the memory 1002 in the compute device 1000A stores instructions for performing functions of the processing module 901. In addition, the memory 1002 in the compute device 1000B stores instructions for performing functions of the interaction module 902 and the conversion module 903.

A connection manner between the compute devices shown in FIG. 12 may be based on a requirement of the method in FIG. 3 or FIG. 6 provided in this application (for example, storing a large amount of second code). Therefore, functions implemented by the interaction module 902 and the conversion module 903 are considered to be performed by the compute device 1000B.

It should be understood that a function of the compute device 1000A shown in FIG. 12 may alternatively be completed by a plurality of compute devices 1000. Similarly, a function of the compute device 1000B may alternatively be completed by a plurality of compute devices 1000.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or some of the procedures or functions according to embodiments of the present application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application. It should be understood that, in embodiments of this application, sequence numbers of the foregoing processes do not mean an execution sequence. The execution sequence of the processes should be determined based on functions and internal logic of the processes, and should not be construed as any limitation on implementation processes of embodiments of this application.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A cloud resource orchestration method, wherein the method comprises:
providing first code to a user, wherein the first code is generated based on a plurality of pieces of second code, the plurality of pieces of second code are provided by a plurality of cloud platforms, and each piece of second code is used to generate an orchestration model for cloud resource orchestration;
receiving a first orchestration model generated by the user based on the first code, wherein the first orchestration model comprises one or more cloud platform identifiers, the one or more cloud platform identifiers indicate one or more first cloud platforms among the plurality of cloud platforms, and second code of the one or more first cloud platforms complies with a first code rule; and
converting, based on the first code rule corresponding to the one or more first cloud platforms, the first orchestration model into a second orchestration model corresponding to the one or more first cloud platforms, wherein the second orchestration model corresponding to each first cloud platform is used to orchestrate a cloud resource of each first cloud platform.

2. The method according to claim 1, wherein before providing the first code to the user, the method further comprises:
parsing the second code of each cloud platform based on the first code rule with which the second code of each cloud platform complies, to obtain a plurality of pieces of first struct data;
aggregating the plurality of pieces of first struct data to obtain second struct data; and
generating the first code based on the second struct data.

3. The method according to claim 2, wherein the first struct data comprises a first cloud resource identifier and data information corresponding to the first cloud resource identifier, and aggregating the plurality of pieces of first struct data to obtain the second struct data comprises:
aggregating, based on a similarity among first cloud resource identifiers in the plurality of pieces of first struct data, the first cloud resource identifiers and data information corresponding to the first cloud resource identifiers in the plurality of pieces of first struct data, to obtain one or more second cloud resource identifiers and data information corresponding to the one or more second cloud resource identifiers; and the second struct data comprises the one or more second cloud resource identifiers and the data information corresponding to the one or more second cloud resource identifiers.

4. The method according to claim 3, wherein the data information corresponding to the second cloud resource identifier comprises a parameter and a variable that correspond to the second cloud resource identifier, and the method further comprises:
aggregating, based on an association relationship between the parameter and the variable that correspond to the second cloud resource identifier, the parameter and the variable that correspond to the second cloud resource identifier.

5. The method according to any one of claims 1 to 4, wherein converting, based on the first code rule corresponding to the one or more first cloud platforms, the first orchestration model into the second orchestration model corresponding to the one or more first cloud platforms comprises:
converting, by using a transformation algorithm, the first orchestration model into the second orchestration model that complies with the first code rule corresponding to the one or more first cloud platforms.

6. The method according to any one of claims 1 to 5, wherein the first cloud platform provides a plurality of pieces of second code, and the plurality of pieces of second code of the first cloud platform respectively comply with second code rules of different resource orchestration platforms; the first orchestration model further comprises a resource orchestration platform identifier corresponding to the one or more cloud platform identifiers; and the method further comprises:
determining, from the second code rules of the plurality of resource orchestration platforms based on the resource orchestration platform identifier corresponding to the one or more cloud platform identifiers, the first code rule corresponding to the one or more first cloud platforms.

7. The method according to claim 6, wherein before providing the first code to the user, the method further comprises:
determining a rule description text of each resource orchestration platform; and
processing the rule description text of each resource orchestration platform by using a language model, to obtain the second code rule of each resource orchestration platform.

8. The method according to any one of claims 1 to 5, wherein the first cloud platform provides one piece of second code, and the method further comprises:
determining, from third code rules of the plurality of cloud platforms based on the one or more cloud platform identifiers, the first code rule corresponding to the one or more first cloud platforms.

9. The method according to claim 8, wherein before providing the first code to the user, the method further comprises:
determining a rule description text of each cloud platform; and
processing the rule description text of each cloud platform by using a language model, to obtain the third code rule of each cloud platform.

10. A cloud resource orchestration apparatus, wherein the apparatus comprises:
a processing module, configured to generate first code based on a plurality of pieces of second code, wherein the plurality of pieces of second code are provided by a plurality of cloud platforms, and each piece of second code is used to generate an orchestration model for cloud resource orchestration;
an interaction module, configured to: provide the first code to a user, and receive a first orchestration model generated by the user based on the first code, wherein the first orchestration model comprises one or more cloud platform identifiers, the one or more cloud platform identifiers indicate one or more first cloud platforms among the plurality of cloud platforms, and second code of the one or more first cloud platforms complies with a first code rule; and
a conversion module, configured to convert, based on the first code rule corresponding to the one or more first cloud platforms, the first orchestration model into a second orchestration model corresponding to the one or more first cloud platforms, wherein the second orchestration model corresponding to each first cloud platform is used to orchestrate a cloud resource of each first cloud platform.

11. The apparatus according to claim 10, wherein the processing module is specifically configured to:
parse the second code of each cloud platform based on the first code rule with which the second code of each cloud platform complies, to obtain a plurality of pieces of first struct data;
aggregate the plurality of pieces of first struct data to obtain second struct data; and
generate the first code based on the second struct data.

12. The apparatus according to claim 11, wherein the first struct data comprises a first cloud resource identifier and data information corresponding to the first cloud resource identifier, and the processing module is specifically configured to:
aggregate, based on a similarity among first cloud resource identifiers in the plurality of pieces of first struct data, the first cloud resource identifiers and data information corresponding to the first cloud resource identifiers in the plurality of pieces of first struct data, to obtain one or more second cloud resource identifiers and data information corresponding to the one or more second cloud resource identifiers; and the second struct data comprises the one or more second cloud resource identifiers and the data information corresponding to the one or more second cloud resource identifiers.

13. The apparatus according to claim 12, wherein the data information corresponding to the second cloud resource identifier comprises a parameter and a variable that correspond to the second cloud resource identifier, and the processing module is further configured to:
aggregate, based on an association relationship between the parameter and the variable that correspond to the second cloud resource identifier, the parameter and the variable that correspond to the second cloud resource identifier.

14. The apparatus according to any one of claims 10 to 13, wherein the conversion module is specifically configured to:
convert, by using a transformation algorithm, the first orchestration model into the second orchestration model that complies with the first code rule corresponding to the one or more first cloud platforms.

15. The apparatus according to any one of claims 10 to 14, wherein the first cloud platform provides a plurality of pieces of second code, and the plurality of pieces of second code of the first cloud platform respectively comply with second code rules of different resource orchestration platforms; the second code rules of the different resource orchestration platforms comprise the first code rule; the first orchestration model further comprises a resource orchestration platform identifier corresponding to the one or more cloud platform identifiers; and the conversion module is further configured to:
determine, from the second code rules of the plurality of different resource orchestration platforms based on the resource orchestration platform identifier corresponding to the one or more cloud platform identifiers, the first code rule corresponding to the one or more first cloud platforms.

16. The apparatus according to claim 15, wherein before providing the first code to the user, the processing module is further configured to:
determine a rule description text of each resource orchestration platform; and
process the rule description text of each resource orchestration platform by using a language model, to obtain the second code rule of each resource orchestration platform.

17. The apparatus according to any one of claims 10 to 14, wherein the first cloud platform provides one piece of second code, and the conversion module is further configured to:
determine the first code rule from third code rules of the plurality of cloud platforms based on the one or more cloud platform identifiers.

18. The apparatus according to claim 17, wherein before providing the first code to the user, the processing module is further configured to:
determine a rule description text of each cloud platform; and
process the rule description text of each cloud platform by using a language model, to obtain the third code rule of each cloud platform.

19. A compute device cluster, comprising at least one compute device, wherein each compute device comprises a processor and a memory; and
the processor of the at least one compute device is configured to execute instructions stored in the memory of the at least one compute device, to enable the compute device cluster to perform the method according to any one of claims 1 to 9.

20. A computer-readable storage medium, comprising instructions, wherein when the instructions are run on a computer, the computer is enabled to perform the method according to any one of claims 1 to 9.

21. A computer program product, comprising instructions, wherein when the instructions are run on a computer, the computer is enabled to perform the method according to any one of claims 1 to 9.
